# FASCICULE DE BREVET EUROPEEN

(11) **EP 4 580 942 B1**
(45) Date de publication et mention de la délivrance du brevet: **03.06.2026**
(21) Numéro de dépôt: 23745538.1
(22) Date de dépôt: 26.07.2023
(51) Int. Cl.: B64D 11/06, B64D 11/00

(54) **LOGEMENT DE CHARGE À INDUCTION POUR UN SIÈGE MUNI D'UN DISPOSITIF DE RETENUE TRANSVERSAL**
INDUKTIONSLADEGEHÄUSE FÜR EINEN SITZ MIT EINER QUERHALTEVORRICHTUNG
INDUCTION CHARGING HOUSING FOR A SEAT, PROVIDED WITH A TRANSVERSE RETAINING DEVICE

(30) Priorité: 31.08.2022 FR 2208695
(43) Date de publication de la demande: 09.07.2025
(73) Titulaire: Safran Seats, 78370 Plaisir (FR)
(72) Inventeur: CAVEREAU, Yann, 77550 Moissy-Cramayel (FR); RUIZ, Oscar, 77550 Moissy-Cramayel (FR); GLAIN, Arthur K., 77550 Moissy-Cramayel (FR)
(74) Mandataire: Marconnet, Sébastien
(86) Numéro de dépôt international: PCT/EP2023/070750
(87) Numéro de publication internationale: WO 2024/046666

(56) Documents cités:
- EP-A1- 2 833 501
- EP-A1- 3 230 162
- DE-A1- 102015 222 685
- US-A1- 2014 183 910
- US-B2- 9 788 021

## Description

La présente invention porte sur un logement de charge à induction pour un siège muni d'un dispositif de retenue transversal. L'invention trouve une application particulièrement avantageuse, mais non exclusive, avec les unités de sièges de type "classe affaires" et "première classe" d'une cabine d'avion.

De façon connue en soi, une telle unité de siège comporte un siège et une console latérale munie de rangements disposée suivant un côté du siège. En outre, une coque s'étend au moins en partie autour du siège de manière à délimiter un espace autour du passager. Une telle configuration permet de garantir l'intimité du passager.

Le siège offre au passager différentes positions de confort, d'une position "assise" jusqu'à une position "allongée", dans laquelle le siège définit un plan de couchage sensiblement horizontal pour que le passager puisse s'allonger. Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut rester sur le siège lors de transitions entre les différentes positions. Le siège est généralement constitué notamment du dossier et d'une assise et est susceptible de comporter un repose-jambes et/ou un repose-pieds, pouvant être fixes ou liés à une cinématique du siège.

La recharge par induction d'appareils électroniques portatifs, typiquement les téléphones portables, est de plus en plus demandée par les compagnies aériennes pour les sièges d'avion de classe affaires. Le chargeur à induction est généralement intégré sur une face supérieure horizontale de la console formant une table sur laquelle le passager peut poser des objets personnels, des boissons, un plateau repas, ou tout type d'objet que le passager souhaiterait avoir à disposition à proximité lors de son voyage. Toutefois, une telle configuration du chargeur à induction ne garantit pas l'immobilité nécessaire du téléphone portable pour assurer sa recharge. En outre, cela occupe un espace supérieur de la console qui pourrait être utilisé à meilleur escient et n'offre pas automatiquement de vision directe de l'avancement de la charge du téléphone depuis le siège du passager.

Le document US9788021 décrit un système d'affichage vidéo pour un siège passager d'un véhicule. Le système d'affichage vidéo est configuré pour être monté sur un dossier de siège de passager. Le système d'affichage comprend un ensemble d'affichage vidéo comportant un boîtier d'affichage configuré pour être monté sur une structure dans le véhicule. Un moniteur vidéo est logé dans le boîtier d'affichage. L'ensemble d'affichage vidéo comprend une portion dépendante disposée sous la zone du moniteur vidéo capable d'afficher un graphique et/ou des informations générés par ordinateur.

Le document EP2833501 décrit un dispositif de support d'un appareil électronique portatif comportant une plaque de sollicitation agencée à l'intérieur d'une section de retenue. La plaque de sollicitation est supportée de façon pivotante au niveau de la section supérieure tandis que la section inférieure est inclinée dans la direction vers la surface de montage d'un boîtier de corps principal. En raison du fait que la section inférieure de la plaque de sollicitation est sollicitée vers la surface de montage du boîtier de corps principal au moyen d'un ressort, la partie supérieure d'un téléphone mobile peut être tirée vers l'avant et vers le haut lorsque le téléphone mobile est inséré dans la section de retenue.

Le document DE102015222685 décrit un dispositif de support destiné à maintenir au moins un terminal mobile à batterie rechargeable dans un véhicule. Le dispositif de support comporte une surface de support sur laquelle un terminal mobile peut être placé, une unité de charge sans fil pour charger sans fil la batterie d'un terminal mobile positionnée sur la surface de stockage. Le dispositif de support est configuré de telle sorte que le terminal mobile peut être fixé en déplaçant la surface de stockage d'une première position à une seconde position.

Le document US2014/183910 décrit un agencement de tablette repas comprenant un tablette repas ayant un premier côté et un deuxième côté. L'agencement de tablette comprend également un agencement de palier pour la tablette repas. Le deuxième côté comprend un dispositif de maintien pour un dispositif mobile. L'agencement de palier est configuré pour faire pivoter l'élément de plateau autour d'au moins un axe qui se trouve dans un plan de la tablette repas ou parallèle à celui-ci.

Le document EP3230162 décrit un système de maintien d'un appareil électronique portatif comprenant un support de dispositif rétractable configuré pour se raccorder à un système de divertissement et pour maintenir l'appareil électronique portatif à l'avant du système de divertissement. Un support de dispositif rétractable peut comprendre des configurations rangée et déployée, de telle sorte que, lorsque le support de dispositif rétractable est rangé, le support de dispositif est au moins partiellement caché derrière le système de divertissement; et lorsque le support de dispositif rétractable est déployé, le support de dispositif est positionné de façon à maintenir l'appareil électronique portatif pour une visualisation par un utilisateur.

L'invention vise à remédier efficacement à ces inconvénients en proposant une unité de siège pour un véhicule de transport comportant un siège comprenant une assise et un dossier,
- un logement de charge à induction pour un appareil électronique portable présentant une orientation verticale,
- ledit logement de charge à induction comportant une face inférieure contre laquelle est destiné à reposer un bord de l'appareil électronique portable, une face supérieure, une face latérale droite, une face latérale gauche, et un fond de logement,
- un chargeur à induction apte à générer un champ magnétique à l'intérieur du logement de charge à induction, et
- un dispositif de retenue de l'appareil électronique portable comportant un bras transversal,
- ledit dispositif de retenue étant configuré pour que le bras transversal maintienne plaqué l'appareil électronique portable contre le fond du logement de charge à induction.

L'invention permet ainsi, grâce à l'intégration d'un logement de charge à induction suivant une orientation verticale, de réaliser une économie d'espace au niveau de la surface de table de la console. L'utilisation du dispositif de retenue permet de garantir la recharge par induction de l'appareil électronique portable lorsque ce dernier présente une orientation verticale. En outre, une telle disposition du logement de charge permet au passager de conserver une vision permanente sur l'appareil électronique portable notamment pour observer l'évolution du niveau de charge de la batterie.

Le bras transversal est situé à une hauteur intermédiaire du logement de charge à induction.

Le dispositif de retenue est mobile en translation suivant une direction normale par rapport au fond du logement de charge à induction.

Le dispositif de retenue comporte un bras transversal et un bras de guidage apte à coulisser à l'intérieur d'une cavité de guidage réalisée dans le fond du logement de charge à induction.

Selon une réalisation de l'invention, un ressort de rappel est disposé à l'intérieur de la cavité de guidage.

Selon une réalisation de l'invention, le dispositif de retenue est fixe par rapport au logement de charge à induction et comporte une couche de matériau déformable fixée sur une face arrière du bras transversal, ladite couche matériau déformable étant destinée à être comprimée pour maintenir plaqué l'appareil électronique portable contre le fond du logement de charge à induction.

Selon une réalisation de l'invention, la couche de matériau déformable est constituée par une couche mousse à mémoire de forme.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'une unité de siège comportant un logement de charge à induction selon la présente invention;
[Fig. 2a] [Fig. 2b] [Fig. 2c] Les figures 2a, 2b, et 2c sont respectivement des vues en perspective, de face, et de côté d'un exemple non revendiqué d'un dispositif de retenue d'un appareil électronique portatif disposé à l'intérieur d'un logement de charge à induction;
[Fig. 3a] [Fig. 3b] [Fig. 3c] Les figures 3a, 3b, et 3c sont respectivement des vues en perspective, de face, et de côté d'un deuxième mode de réalisation d'un dispositif selon l'invention de retenue d'un appareil électronique portatif disposé à l'intérieur d'un logement de charge à induction;
[Fig. 4a] [Fig. 4b] [Fig. 4c] Les figures 4a, 4b, et 4c sont respectivement des vues en perspective, de face, et de côté d'un troisième mode de réalisation d'un dispositif selon l'invention de retenue d'un appareil électronique portatif disposé à l'intérieur d'un logement de charge à induction.

Il est à noter que les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Par ailleurs, dans la suite de la description, les termes relatifs du type "inférieur", "supérieur", "gauche", "droite", "horizontal", "vertical" sont entendus par référence au sens commun que leur donnerait un passager assis sur un siège en face duquel se trouve un logement de charge à induction selon l'invention.

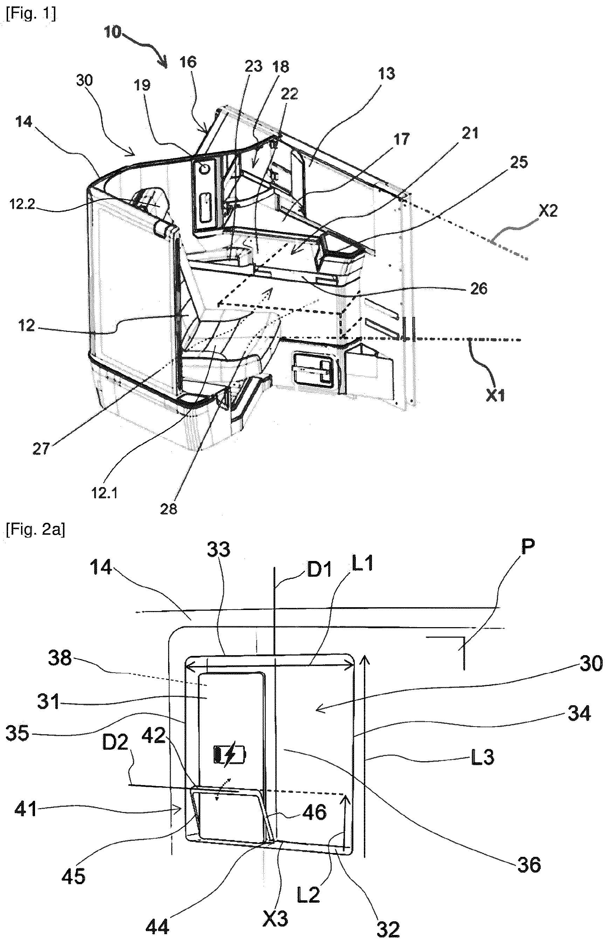

La figure 1 montre une unité de siège 10 comportant un siège 12 associé à une console latérale 13 s'étendant suivant un côté du siège 12.

Plus précisément, le siège 12 comporte une assise 12.1 et un dossier 12.2. Le siège 12 présente un axe d'extension X1 défini par l'intersection entre un plan horizontal et un plan médian vertical du siège 12 correspondant à un plan de symétrie du siège 12. L'axe d'extension X1 du siège 12 peut former un angle non nul par rapport à une direction parallèle ou confondu avec un axe central de l'avion X2. En l'occurrence, le siège 12 est tourné en direction de l'axe X2. En variante, le siège 12 peut être tourné dans une direction opposée à l'axe X2. En variante, l'axe X1 du siège 12 s'étend parallèlement à l'axe central de l'avion X2.

Le siège 12 est avantageusement pourvu d'une cinématique lui permettant d'être mobile entre une position "assise", dans laquelle le siège 12 est configuré pour définir une position assise d'un passager, et une position "allongée", dans laquelle l'assise 12.1 et le dossier 12.2 définissent une surface de couchage pour le passager, avantageusement sensiblement horizontale. Des positions intermédiaires de confort sont aussi proposées, telles que la position "relax" dans laquelle un dossier du siège 12 est fortement incliné.

Une coque d'intimité 14 s'étend au moins en partie autour du siège 12 de manière à délimiter un espace autour du passager. La coque d'intimité 14 est réalisée par exemple dans un matériau composite. Une telle configuration permet de garantir l'intimité du passager assis sur le siège 12.

Un écran vidéo 16 d'un système multimédia ou IFE (pour "Inflight Entertainment System" en anglais) peut être implanté sur une partie arrière de la coque d'intimité 14 de façon à être utilisable par un passager arrière.

La console 13 peut comporter une paroi supérieure 17 formant une table sur laquelle le passager peut poser des objets ainsi qu'un espace de stockage 18 comportant un ou plusieurs éléments parmi une pochette littérature, un porte-bouteille, ou un minibar. Le choix des rangements est configurable en fonction du souhait de la compagnie aérienne. La console 13 peut également comporter une liseuse 19 destinée à orienter un éclairage en direction du siège 12.

Une cavité 21 est située sous la paroi supérieure 17. La cavité 21 est ouverte latéralement en direction du siège 12. En outre, une face horizontale 22 de la console 13 a notamment une fonction d'accoudoir. A cet effet, la face horizontale 22 peut présenter localement une forme de manchette incurvée 23 épousant la forme d'une partie du bras du passager.

La console 13 comporte également une unité de contrôle 25 du siège 12 et de ses composants annexes (dite "PCU" pour "Passenger Control Unit" en anglais). L'unité de contrôle 25 permet notamment au passager de commander la sélection d'une position du siège 12 ainsi que les composants annexes, tels qu'un système vidéo, un dispositif de chauffage, un système d'ambiance lumineuse ou tout autre composant annexe pouvant être intégré au siège 12.

Afin de permettre l'allongement du passager, la console 13 peut comporter un espace creux 27 vu par transparence sur la figure 1 dans lequel est disposé un ottoman 28. L'ottoman 28 comporte une face horizontale formant un repose-pieds sur lequel un passager arrière peut poser ses pieds lorsque le siège 12 se trouve en position "allongée".

L'unité de siège 10 peut également comporter classiquement une tablette repas 26 mobile entre une position stockée (correspondant à celle représentée sur la figure 1) dans laquelle la tablette repas 26 se trouve à l'intérieur d'un logement ménagé dans la console 13 et une position déployée dans laquelle la tablette repas 26 se situe à l'extérieur du logement pour permettre au passager d'y poser un plateau repas.

L'unité de siège 10 comporte en outre un logement de charge à induction 30 pour un appareil électronique portable 31. Cet appareil électronique portable 31 peut prendre la forme d'un téléphone portable, d'une tablette numérique, ou d'un ordinateur portable. Dans la suite de la description, il est fait référence à un téléphone portable à titre d'exemple mais il est clair que ce téléphone portable pourrait être remplacé par tout autre appareil électronique portable susceptible d'être rechargé par induction.

Le logement de charge à induction 30 est situé à l'arrière du dossier 12.2. En l'occurrence, le logement de charge à induction 30 est réalisé dans la face arrière de la coque d'intimité 14. Alternativement, le logement de charge à induction 30 peut être réalisé dans la face arrière du dossier 12.2.

Le logement de charge à induction 30 comporte une face inférieure 32 contre laquelle est destiné à reposer un bord du téléphone portable 31, une face supérieure 33, une face latérale droite 34, une face latérale gauche 35, et un fond de logement 36. Le fond 36 est situé en retrait par rapport à la face arrière de la coque d'intimité 14 ou le cas échéant du dossier 12.2. Les faces 32, 33, 34, 35 s'étendent perpendiculairement par rapport au fond 36.

Le logement de charge à induction 30 présente une orientation verticale, de sorte que le fond 36 du logement de charge à induction 30 s'étend dans un plan vertical P. Le logement de charge à induction 30 est ainsi ouvert vers l'extérieur suivant une direction horizontale. Avantageusement, le logement de charge à induction 30 présente une direction d'allongement longitudinale D1 s'étendant suivant une direction verticale. Alternativement, la direction d'allongement longitudinale D1 peut s'étendre suivant une direction horizontale.

Un chargeur à induction 38 est apte à générer un champ magnétique à l'intérieur du logement de charge à induction 30. L'action de ce champ magnétique entraîne l'apparition d'un courant de recharge d'une batterie à l'intérieur du téléphone portable 31 muni d'une bobine à cet effet. Le chargeur à induction 38 est avantageusement disposé derrière le fond 36 du logement de charge à induction 30. Alternativement, le chargeur à induction 38 constitue au moins une portion, voire la totalité, du fond 36. Ainsi, lorsque le téléphone portable 31 est plaqué contre le fond 36 du logement 30, la recharge de la batterie du téléphone portable 31 peut être effectuée sans contact par l'intermédiaire du chargeur à induction 38.

Un dispositif de retenue 41 de l'appareil électronique portable 31 comporte un bras transversal 42. Le dispositif de retenue 41 est configuré pour que le bras transversal 42 maintienne plaqué l'appareil électronique portable 31 contre le fond 36 du logement de charge à induction 30 derrière lequel est disposé le chargeur à induction 38.

A cet effet, le bras transversal 42 présente une direction d'extension longitudinale D2 s'étendant parallèlement par rapport au fond 36 du logement de charge à induction 30. Avantageusement, le bras transversal 42 présente une direction d'extension longitudinale D2 s'étendant suivant une direction horizontale. Dans l'exemple représenté, le bras transversal 42 présente une direction d'extension longitudinale D2 s'étendant perpendiculairement par rapport à la direction d'allongement longitudinale D1 du logement de charge à induction 30. En variante, le bras transversal 42 présente une direction d'extension longitudinale s'étendant suivant une direction verticale.

Avantageusement, le bras transversal 42 s'étend suivant au moins une portion d'une largeur L1 du logement de charge à induction 30, notamment suivant au moins 30%, notamment au moins 50%de la largeur totale du logement de charge à induction 30. De préférence, le bras transversal 42 est configuré pour s'étendre suivant au moins 80% de la largeur L1 du téléphone portable 31 et de préférence suivant toute la largeur du téléphone portable 31.

Le bras transversal 42 est situé à une hauteur intermédiaire L2 du logement de charge à induction 30 pour assurer un appui homogène sur l'appareil électronique portable 31. La hauteur intermédiaire L2 est comprise entre 20% et 80%, de préférence entre 20% et 50%, de la hauteur totale L3 du logement de charge à induction 30. Les hauteurs L2 et L3 sont mesurées verticalement rapport à la face inférieure 32 du logement de charge à induction 30.

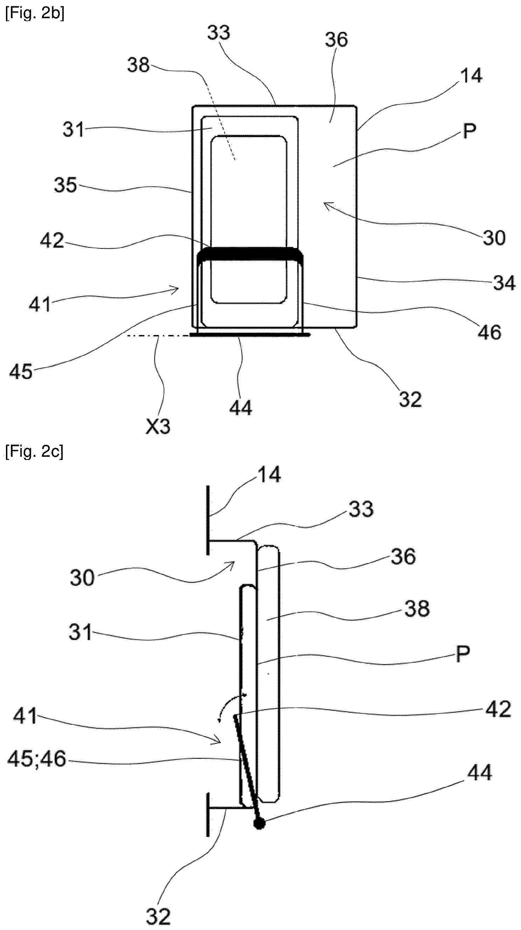

Dans l'exemple non revendiqué illustré aux figures 2a, 2b, et 2c, le dispositif de retenue 41 est mobile en rotation autour d'une charnière à ressort 44 ayant un axe horizontal X3.

Plus précisément, le dispositif de retenue 41 comporte deux bras latéraux 45, 46 s'étendant de part et d'autre du bras transversal 42. Chaque bras latéral 45, 46 comporte une extrémité libre connectée à la charnière à ressort 44. La pièce mobile présente ainsi une forme en U inversé de façon à pouvoir soutenir le téléphone portable 31 dans sa partie centrale sans cacher les parties inférieure et latérales du téléphone portable 31.

La charnière à ressort 44 est positionnée en dessous ou au niveau de la face inférieure 32 du logement de charge à induction 30. La charnière à ressort 44 peut être située dans le plan du fond 36 du logement de charge à induction 30. Alternativement, la charnière à ressort 44 peut être décalée vers l'arrière par rapport au plan du fond 36 du logement de charge à induction 30.

Le dispositif de retenue 41 est mobile entre une position ouverte dans laquelle le dispositif de retenue 41 est éloigné par rapport au fond 36 du logement de charge à induction 30 pour permettre une insertion du téléphone portable 31 dans l'espace s'étendant entre le bras transversal 42 et le fond 36 du logement de charge à induction 30 et une position fermée dans laquelle le dispositif de retenue 41 vient en appui, via le bras transversal 42, contre la face avant du téléphone portable 31 pour plaquer ledit téléphone portable 31 contre le fond 36 du logement de charge à induction 30.

En position ouverte, l'écart entre le dispositif de retenue 41 et le fond 36 du logement est de l'ordre de 10mm pour faciliter le positionnement du téléphone portable 31. Lorsqu'aucun téléphone portable 31 n'est placé derrière le bras transversal 42, le bras transversal 42 est plaqué contre le fond 36 du logement de charge à induction 30 ou présente un très faible écart, notamment compris entre 1mm et 5mm par rapport au fond 36 du logement de charge à induction 30. Un tel débattement du dispositif de retenue 41 permet ainsi de s'adapter aisément à des téléphones portables 31 d'épaisseur variable d'un modèle à l'autre.

Afin d'installer son téléphone portable 31 à l'intérieur du logement de charge, le passager tire le dispositif de retenue 41 vers lui, de façon à le faire pivoter autour de la charnière à ressort 44 suivant la flèche F1 pour écarter le bras transversal 42 par rapport au fond 36 et faire ainsi passer le dispositif de retenue 41 dans la position ouverte. Le passager peut alors positionner son téléphone portable 31 entre le fond 36 du logement de charge à induction 30 et le bras transversal 42. En relâchant le dispositif de retenue 41, le bras transversal 42 vient automatiquement plaquer le téléphone portable 31 contre le fond 36 du logement de charge à induction 30 et donc contre le chargeur à induction 38 du fait de l'action du ressort de la charnière 44. Lorsque le dispositif de retenue 41 est plaqué contre le téléphone portable 31, l'angle que forme les bras latéraux 45, 46 par rapport à une direction verticale dépend de l'épaisseur du téléphone portable 31.

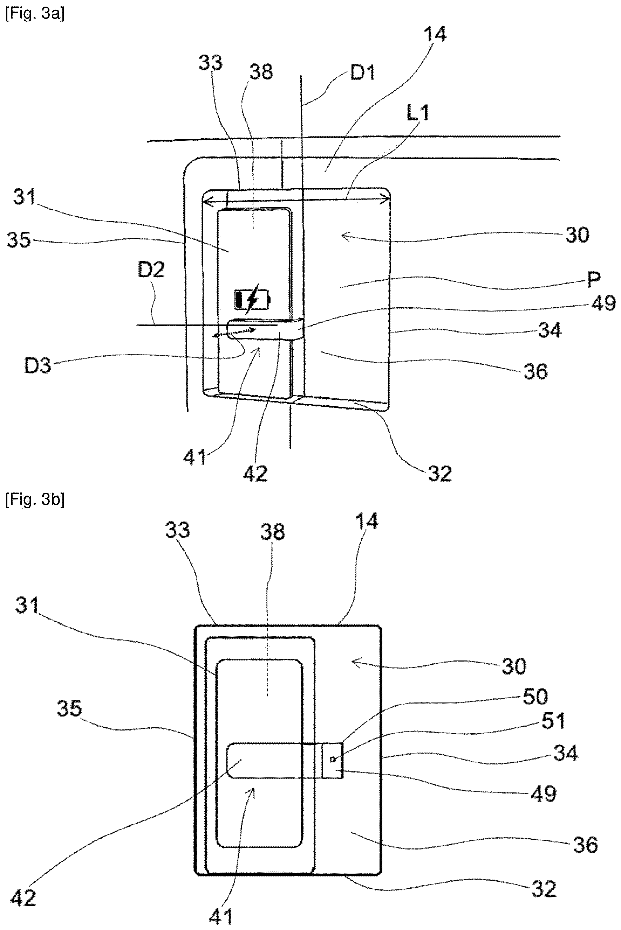

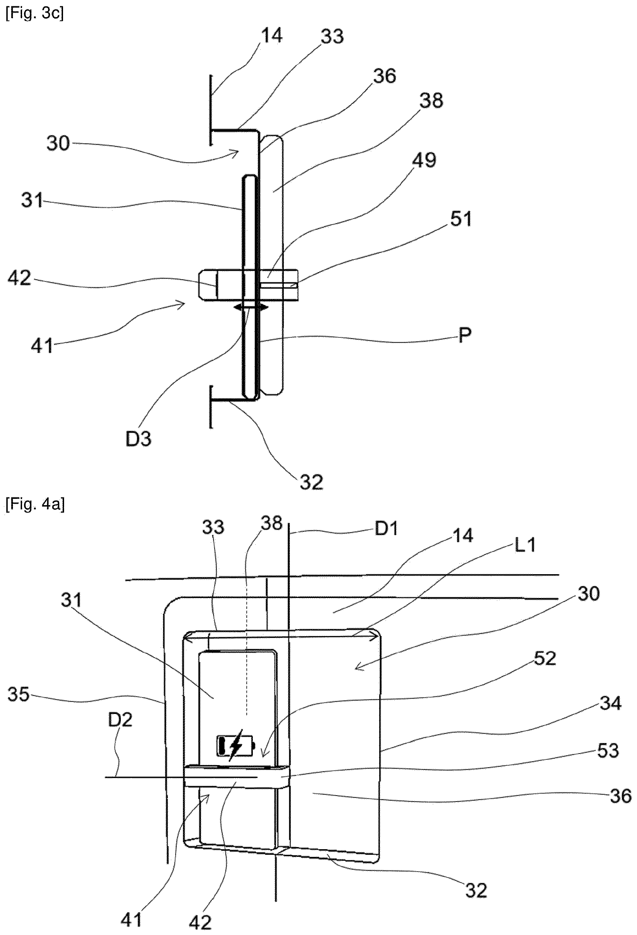

Dans le mode de réalisation des figures 3a, 3b, 3c, le dispositif de retenue 41 est mobile en translation suivant une direction D3 normale par rapport au fond 36 du logement de charge à induction 30.

Le dispositif de retenue 41 comporte le bras transversal 42 et un bras de guidage 49 apte à coulisser à l'intérieur d'une cavité de guidage 50 réalisée dans le fond 36 du logement de charge à induction 30. Le bras de guidage 49 peut être situé du côté de la face latérale droite 34 ou de la face latérale gauche 35 du logement de charge à induction 30. Le dispositif de retenue 41 présente ainsi une forme en L. L'espace délimité par le dispositif de retenue 41 et le fond 36 du logement est ouvert du côté opposé au bras de guidage 49.

Un ressort de rappel 51 est disposé à l'intérieur de la cavité de guidage 50. Le ressort de rappel 51 tend à appliquer un effort de rappel sur le dispositif de retenue 41 en direction du fond 36 du logement de charge à induction 30.

Le dispositif de retenue 41 est mobile entre une position ouverte dans laquelle le dispositif de retenue 41 est éloigné par rapport au fond 36 du logement de charge à induction 30 pour permettre une insertion du téléphone portable 31 dans l'espace s'étendant entre le bras transversal 42 et le fond 36 du logement de charge à induction 30 et une position fermée dans laquelle le dispositif de retenue 41 vient en appui, via le bras transversale 42, contre la face avant du téléphone portable 31 pour plaquer ledit téléphone portable 31 contre le fond 36 du logement de charge à induction 30.

En position ouverte, l'écart entre le dispositif de retenue 41 et le fond 36 du logement est de l'ordre de 10mm pour faciliter le positionnement du téléphone portable 31. Lorsqu'aucun téléphone n'est placé derrière le bras transversal 42, le bras transversal 42 est plaqué contre le fond 36 du logement de charge à induction 30 ou présente un très faible écart, notamment compris entre 1 et 5mm par rapport au fond 36 du logement de charge à induction 30. Un tel débattement du dispositif de retenue 41 permet ainsi de s'adapter aisément à des téléphones portables d'épaisseur variable d'un modèle à l'autre.

Afin d'installer son téléphone portable 31 à l'intérieur du logement de charge à induction 30, le passager tire le dispositif de retenue 41 vers lui de façon à écarter le bras transversal 42 par rapport au fond 36 pour faire passer le dispositif de retenue 41 dans une position ouverte. Le passager peut alors positionner son téléphone entre le fond 36 et le bras transversal 42. En relâchant le dispositif de retenue 41, le bras transversal 42 vient automatiquement plaquer le téléphone contre le fond 36 du logement de charge à induction 30 et donc contre le chargeur à induction 38 du fait de l'action du ressort de rappel 51.

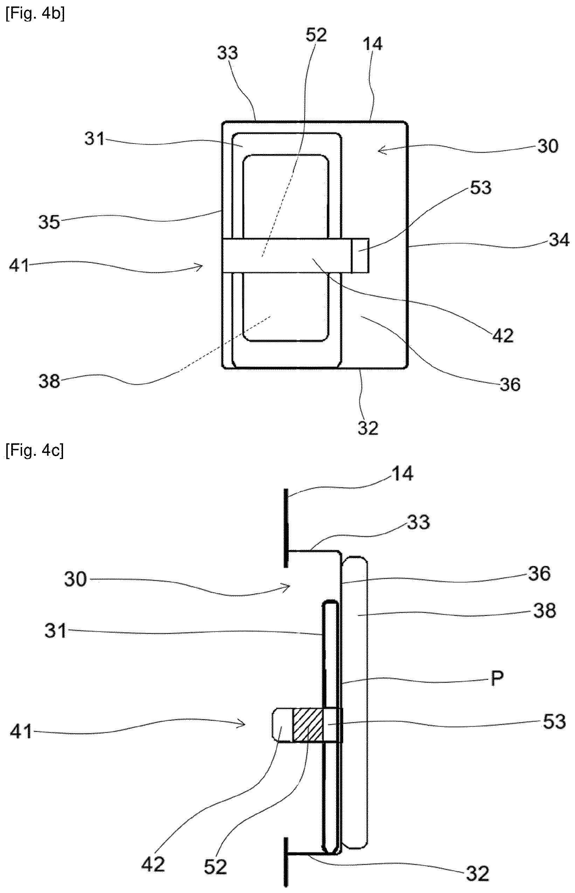

Dans le mode de réalisation des figures 4a, 4b, et 4c, le dispositif de retenue 41, en particulier le bras 42, est fixe par rapport au logement de charge à induction 30. Une couche 52 de matériau déformable est fixée sur une face arrière dudit bras transversal 42. située en regard du fond 36 du logement de charge à induction 30. La fixation de la couche 52 de matériau déformable peut être effectuée par collage, surmoulage, ou toute autre technique de fixation adaptée à l'application. La couche 52 de matériau déformable est de préférence constituée par une couche de mousse à mémoire de forme. Alternativement, il est possible d'utiliser tout autre matériau déformable adapté à l'application.

La couche 52 de matériau déformable étant destinée à être comprimée pour maintenir plaqué le téléphone portable 31 contre le fond 36 du logement de charge à induction 30.

Le bras transversal 42 peut être connecté au fond 36 du logement de charge à induction 30 par l'intermédiaire d'un bras de liaison 53 situé à une extrémité du bras transversal 42. Le bras de liaison 53 peut être situé du côté de la face latérale droite 34 ou de la face latérale gauche 35 du logement de charge à induction 30. L'extrémité libre du bras transversal 42 peut être connectée mécaniquement avec la face latérale opposée à celle du côté de laquelle est disposé le bras de liaison 53. Alternativement, le bras transversal 42 peut être connecté directement à la face latérale droite 34 ou gauche 35 du logement de charge à induction 30. Le bras transversal 42 s'étend alors depuis la face transversale gauche ou droite transversalement à l'intérieur du logement de charge à induction 30. Alternativement, des bras de liaison 53 disposés de part et d'autre du bras transversal 42 sont liés mécaniquement au fond 36 du logement de charge à induction 30.

En l'absence de téléphone, la couche 52 de mousse n'est pas écrasée, c'est-à-dire comprimée. Il existe alors un faible espace, par exemple compris entre 3mm et 7mm et valant de préférence 5mm d'espace entre le fond 36 du rangement et la couche de mousse 52. Cet écart est prévu pour être inférieur à une épaisseur du téléphone portable 31.

Lorsque le téléphone portable 31 est inséré derrière le bras transversal 42 entre la couche de mousse 52 et le fond 36 du logement de charge à induction 30, la couche de mousse 52 se comprime entre le téléphone portable 31 et le bras 42 fixe de sorte que le téléphone portable 31 est maintenu en position à l'intérieur du logement de charge à induction 30. Lorsque la couche de mousse 52 est comprimée, l'espace entre la mousse et le fond 36 du logement de charge à induction 30 correspond à l'épaisseur du téléphone. L'espace est par exemple compris entre 8mm et 10mm. La compression de la couche de mousse 52 engendrée par la mise en place du téléphone portable 31 permet de garantir le plaquage du téléphone portable 31 contre le chargeur à induction 38 tout en évitant les mouvements latéraux du téléphone portable 31.

Bien entendu, les différentes caractéristiques, variantes et/ou formes de réalisation de la présente invention peuvent être associées les unes avec les autres selon diverses combinaisons dans la mesure où elles entrent dans le champ des revendications annexées.

En outre, l'invention n'est pas limitée aux modes de réalisation décrits précédemment et fournis uniquement à titre d'exemple. Elle englobe diverses modifications, formes alternatives et autres variantes que peut envisager l'homme du métier dans le cadre des revendications annexées.

## Revendications

1. Unité de siège (10) pour un véhicule de transport comportant un siège comprenant une assise et un dossier (12.2),
- un logement de charge à induction (30) pour un appareil électronique portable (31),
- ledit logement de charge à induction (30) présentant une orientation verticale,
- ledit logement de charge à induction (30) comportant une face inférieure (32) contre laquelle est destiné à reposer un bord de l'appareil électronique portable (31), une face supérieure (33), une face latérale droite (34), une face latérale gauche (35), et un fond de logement (36),
- un chargeur à induction (38) apte à générer un champ magnétique à l'intérieur du logement de charge à induction (30), et
- un dispositif de retenue (41) de l'appareil électronique portable (31) comportant un bras transversal (42) situé à une hauteur intermédiaire (L2) du logement de charge à induction (30),
- ledit dispositif de retenue (41) étant configuré pour que le bras transversal (42) maintienne plaqué l'appareil électronique portable (31) contre le fond (36) du logement de charge à induction (30), le dispositif de retenue (41) étant mobile en translation suivant une direction normale par rapport au fond (36) du logement de charge à induction (30),
**caractérisée en ce que** le dispositif de retenue (41) comporte le bras transversal (42) et un bras de guidage (49) apte à coulisser à l'intérieur d'une cavité de guidage (50) réalisée dans le fond (36) du logement de charge à induction (30).

2. Unité de siège selon la revendication 1, **caractérisée en ce qu'**un ressort de rappel (51) est disposé à l'intérieur de la cavité de guidage (50).

## Patentansprüche

1. Sitzeinheit (10) für ein Transportfahrzeug mit:
- einem Sitz mit einer Sitzbasis und einer Rückenlehne (12.2), und
- einer Induktionsladeaufnahme (30) für ein tragbares elektronisches Gerät (31),
- wobei die Induktionsladeaufnahme (30) eine vertikaler Ausrichtung aufweist,
- wobei die Induktionsladeaufnahme (30) eine Unterseite (32), an der eine Kante des tragbaren elektronischen Geräts (31) anliegen soll, eine Oberseite (33), eine rechte Seitenfläche (34), eine linke Seitenfläche (35) und einen Aufnahmeboden (36) umfasst,
- einem Induktionsladegerät (38), das in der Lage ist, ein Magnetfeld im Inneren der Induktionsladeaufnahme(30) zu erzeugen,
- wobei eine Haltevorrichtung (41) für das tragbare elektronische Gerät (31) einen Querarm (42) umfasst, der sich in einer mittleren Höhe (L2) der Induktionsladeaufnahme (30) befindet,
- wobei die Haltevorrichtung (41) so konfiguriert ist, dass der Querarm (42) das tragbare elektronische Gerät (31) gegen den Boden (36) der Induktionsladeaufnahme (30) drückt,
- wobei die Haltevorrichtung (41) gemäß einer Translationsbewegung in einer senkrechter Richtung relativ zum Boden (6) der Induktionsladeaufnahme (30) beweglich ist,
**dadurch gekennzeichnet, dass** die Haltevorrichtung (41) den Querarm (42) und einen Führungsarm, der in einer Führungsvertiefung (50) im Boden (33) der Induktionsladeaufnahme (30) gleiten kann, umfasst.

2. Sitzeinheit nach Anspruch 1, **dadurch gekennzeichnet, dass** eine Rückstellfeder (51) im Inneren der Führungsvertiefung (50) angeordnet ist.

## Claims

1. A seat unit (10) for a transport vehicle comprising:
- a seat comprising a seat pan and a backrest (12.2), and
- an induction charging housing (30) for a portable electronic device (31),
- said induction charging housing (30) having a vertical orientation,
- said induction charging housing (30) comprising a lower face (32) against which an edge of the portable electronic device (31) is intended to rest, an upper face (33), a right side face (34), a left side face (35), and a housing bottom (36) ,
- an induction charger (38) capable of generating a magnetic field inside the induction charging housing (30),
- a retaining device (41) for the portable electronic device (31) including a transverse arm (42) located at an intermediate height (L2) of the induction charging housing (30),
- the retaining device (41) being configured so that the transversal arm (42) presses the portable electronic device (31) against the bottom (36) of the induction charging housing (30),
- the retaining device (41) being mobile in translation in a normal direction relative to the bottom (6) of the induction charging housing (30),
**characterized in that** the retaining device (41) includes the transversal arm (42) and a guiding arm that is able to slide in a guiding cavity (50) made in the bottom (33) of the induction charging housing (30).

2. The seat unit according to claim 1, **characterized in that** a return spring (51) is arranged inside the guiding cavity (50).
